(19) **Europäisches Patentamt / European Patent Office / Office européen des brevets**

(11) **EP 3 812 702 B1**

(12) # EUROPEAN PATENT SPECIFICATION

(45) Date of publication and mention
of the grant of the patent:
**11.06.2025 Bulletin 2025/24**

(51) International Patent Classification (IPC):
**G01C 15/08** *(2006.01)* **G01C 15/00** *(2006.01)*

(21) Application number: **20201829.7**

(22) Date of filing: **14.10.2020**

(52) Cooperative Patent Classification (CPC):
**G01C 15/08; G01C 15/002**

(54) **LASER SCANNER**

LASERSCANNER

SCANNER LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2019 JP 2019194667**

(43) Date of publication of application:
**28.04.2021 Bulletin 2021/17**

(73) Proprietor: **TOPCON CORPORATION**
**Tokyo 174-8580 (JP)**

(72) Inventor: **YASUTOMI, Satoshi**
**Tokyo 174-8580 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**DE-A1- 102009 035 026      DE-A1- 19 802 379
DE-B4- 102009 035 026      US-A1- 2015 160 000
US-A1- 2018 356 249**

## Description

TECHNICAL FIELD

The present disclosure relates to a laser scanner and, more particularly, to a laser scanner including an electronic level.

BACKGROUND

Conventionally, there is known a surveying instrument configured by integrating a laser scanner that acquires point cloud data for a measurement target and a total station that performs distance measurement and angle measurement with respect to the measurement target (for example, Patent Literature 1). The surveying instrument disclosed in Patent Literature 1 is advantageous in, when the laser scanner acquires point cloud data from a plurality of locations, measuring the coordinate value and direction angle of an instrument point for incorporating the point cloud data at each point.

On the other hand, there is known an electronic level as a surveying instrument, which performs height measurement and distance measurement by using a leveling staff engraved with a predetermined barcode (for example, Patent Literature 2).

However, a surveying instrument obtained by integrating a laser scanner and an electronic level has not been proposed.

RELATED ART DOCUMENT

PATENT LITERATURE

Patent literature 1 JP2019-128196 A
Patent literature 2 JP2015-034726 A

SUMMARY OF INVENTION

TECHNICAL PROBLEM

The present inventor has found the following problem from an extensive study by considering that a laser scanner integrated with an electronic level can survey an instrument point with a certain degree of accuracy in combination with a dedicated leveling staff.

The surveying instrument disclosed in Patent Literature 1, etc., is configured such that the rotation axis of the scanner in the vertical direction is orthogonal to the collimation direction of the telescope of the total station.

However, an electronic level is preferably shaped such that the direction of the collimation optical axis of the telescope coincides with the longitudinal direction in consideration of a basic function as a level. Accordingly, arranging a scanner on the top of an electronic level as in the surveying apparatus disclosed in Patent Literature 1 will increase the ineffective range of scan light, so-called "vignetting," in which the housing of the electronic level interferes with the scan range and is reflected in point cloud data, thus posing a problem that the effective irradiation range in which point cloud data can be acquired decreases.

DE 198 02 379 A1 discloses a surveying unit which comprises a telescope located rotationally about a horizontal axis at a main housing of an overall station. A vertical light passage opening is designed in the main housing for the distance measuring light, which allows the transmission of the light through the main body to measure the distance to the ground.

The present invention has been made in view of this situation, and an object of the present invention is to provide a laser scanner combined with an electronic level without a reduction in effective irradiation range.

SOLUTION TO PROBLEM

In order to achieve the object described above, a laser scanner according to an aspect of the present invention includes an electronic level unit and a scanner unit. The electronic level unit includes a telescope and a level housing that houses the telescope, and an image sensor included in the level housing. The electronic level unit is configured to acquire an image of an electronic level leveling staff collimated with the telescope, and measuring a height of the leveling staff at a collimation position and a distance to the leveling staff by extracting code patterns from the image data of the leveling staff (LS) and collating the code patterns with the reference code stored in advance.

The scanner unit includes a distance measuring unit configured to perform distance measurement by emitting distance-measuring light and receiving reflected light from a measurement target, a turning mirror configured to rotate and irradiate the distance-measuring light in a vertical direction, and a vertical rotation driving unit configured to rotate and drive the turning mirror, a horizontal rotation driving unit configured to integrally rotate and drive the electronic level unit and the scanner unit in a horizontal direction, and a horizontal angle detector and a vertical angle detector for detecting a direction angle of the distance-measuring light to scan the distance measuring light in the horizontal and vertical direction to acquire point cloud data of the measuring target.

The scanner unit is configured to acquire an instrument height by irradiating a ground surface with the distance-measuring light in the vertical direction, and the turning mirror has a rotation axis arranged parallel to a collimation optical axis of the telescope of the electronic level unit.

In the aspect described above, it is also preferable that the scanner unit is arranged on a top of the telescope of the electronic level unit such that a center of the scanner unit and a center of the electronic level unit are coincide with each other in the horizontal direction, an upper surface and a lower surface of the level housing are provided with windows that transmit distance-measuring light from the scanner unit the level housing internally includes a plurality of deflecting mirrors, and the plurality of deflecting mirrors reflect distance-measuring light emitted vertically downward from the scanner unit so as to avoid the telescope and irradiate the distance-measuring light vertically downward from the window provided in the lower surface side.

In the aspect described above, it is also preferable that the electronic level unit includes an objective lens at a first end and an eyepiece lens at a second end, and the scanner unit is arranged on any one of the first end and the second end of the electronic level unit in a cantilever fashion.

In the aspect described above, it is also preferable that the scanner unit is arranged on the bottom of the electronic level unit.

In the aspect described above, it is also preferable that the level housing includes a narrow portion at a portion including the rotating irradiation plane. And, the plurality of deflecting mirrors reflects distance-measuring light so as to avoid the narrow portion and the telescope and irradiate the distance-measuring light vertically downward from the window provided in the lower surface side.

In the aspect described above, it is also preferable that the scanner unit is arranged at the top of the object lens side portion, the top of the eyepiece lens side portion, or both tops of the object lens side portion and the top of the object lens side portion, of the electronic level unit.

Note that in the present description, a leveling staff height (or the height of a leveling staff) is the height indicated by the collimation position of the leveling staff and indicates the height read by the electronic level.

EFFECT OF INVENTION

According to the aspect described above, it is possible to provide a laser scanner combined with an electronic level without a reduction in effective irradiation range.

BRIEF DESCRIPTION OF DRAWINGS

FIG. 1 is a perspective view illustrating the external configuration of a laser scanner according to a first embodiment of the present invention.
FIG. 2 is a longitudinal sectional view taken along a plane including an axis V-V of the laser scanner.
FIG. 3 is a longitudinal sectional view taken along a plane orthogonal to the axis V-V of the laser scanner.
FIGS. 4A and 4B are views for explaining a difference in effective irradiation range depending on the arrangement direction of a scanner unit.

FIG. 5A is a longitudinal sectional view of a laser scanner according to a modification of the first embodiment taken along a plane including the axis V-V of the electronic level unit, FIG. 5B is a sectional view taken along a line VB-VB of the electronic level unit in FIG. 5A, and FIG. 5C is a sectional view taken along a line VC-VC in FIG. 5A.
FIG. 6A is a front view of a laser scanner according to a second embodiment of the present invention, and FIG. 6B is a plan view of the laser scanner.
FIG. 7 is a longitudinal sectional view of the laser scanner taken along a plane including an axis V-V of a scanner unit.
FIG. 8A is a front view of a laser scanner according to a modification of the second embodiment, and FIG. 8B is a plan view of the laser scanner.

DESCRIPTION OF EMBODIMENTS

Preferred embodiments of the present invention will be described below with reference to the accompanying drawings. However, the present invention is not limited to these preferred embodiments. In the respective embodiments, the same terms denote members having the same operation functions, and the same reference numerals denote the same components. Redundant descriptions will be omitted as appropriate.

(Leveling Staff Used for Surveying Using Laser scanner according to Embodiments)

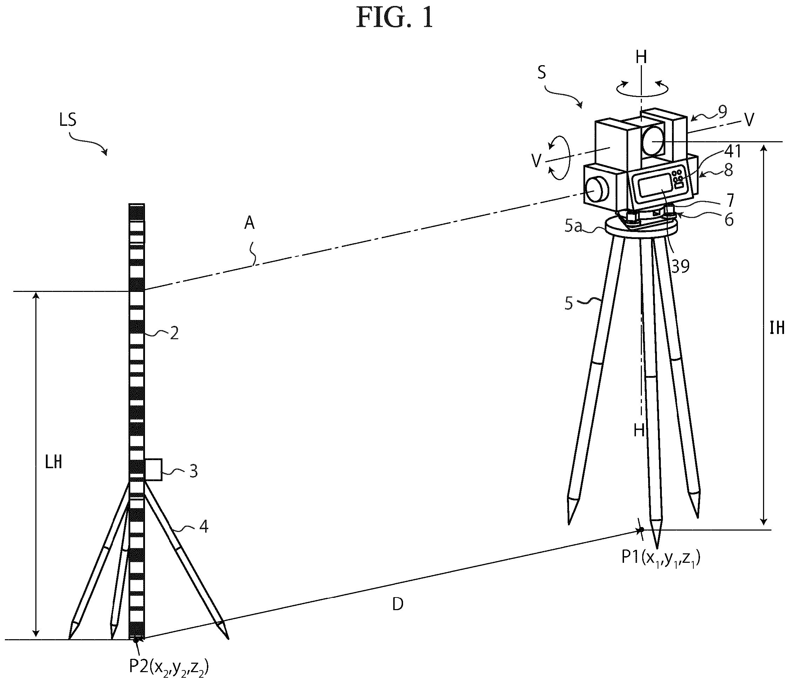

A leveling staff LS commonly used in the description of the embodiments will be described first. As illustrated in FIG. 1, the leveling staff LS is a barcode leveling staff for a so-called electronic level. The leveling staff LS is obtained by, for example, printing or engraving a barcode pattern 2 on a straight base made of aluminum or carbon fiber. The barcode pattern 2 indicates a length, i.e. height, from the lower end portion of the leveling staff, with bars vertically arranged at predetermined intervals. The leveling staff LS includes a level 3 such as a circular level and is installed with a leveling staff stand 4, etc., so as to vertically stand by itself. The levelling staff Ls may be vertically held by a worker instead of using the leveling staff stand 4.

(First Embodiment)

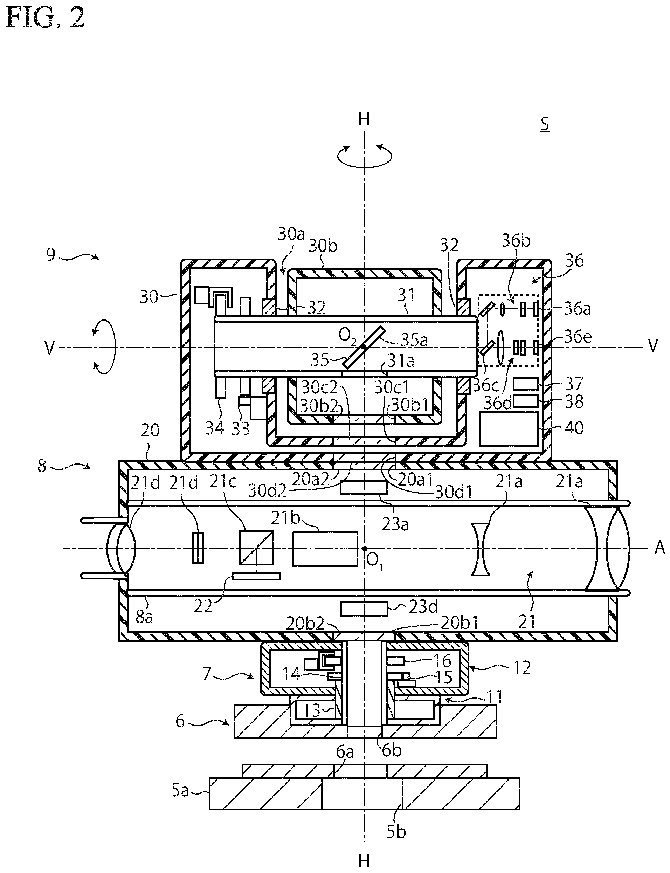

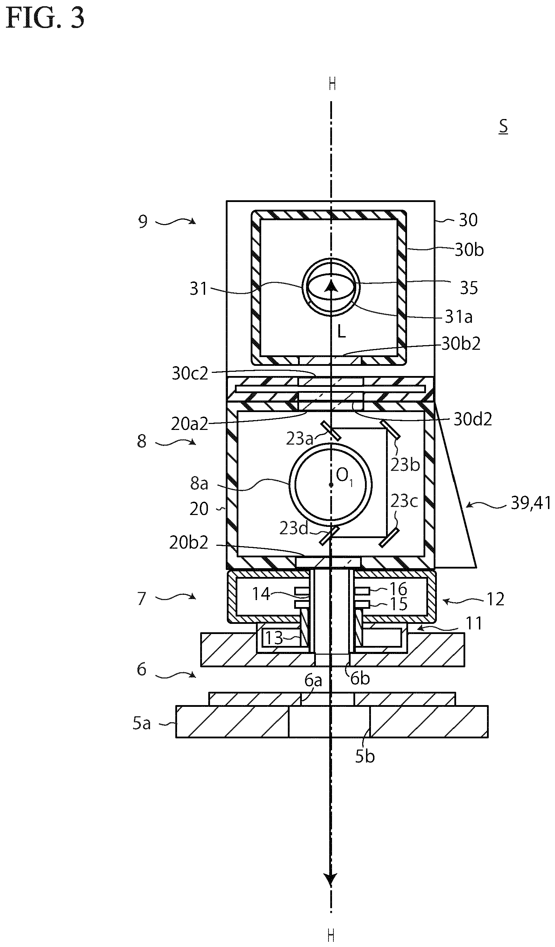

FIG. 1 is a schematic external view illustrating the measuring state of a laser scanner S according to the first embodiment. FIG. 2 is a sectional view taken along a vertical plane passing through an instrument center $O_1$ of an electronic level unit 8. FIG. 3 is a sectional view taken along a vertical plane passing through the instrument center $O_1$ of the electronic level unit 8 and orthogonal to the vertical plane of FIG.2. Note that FIGS. 2 and 3 illustrate a state in which the irradiation direction of distance-measuring light is vertically downward. In addition, for the sake of descriptive convenience, FIGS. 2 and 3 illustrate the electronic level unit while some components and hatchings are omitted as appropriate.

(Configuration of Laser scanner)

The laser scanner S includes, in appearance, a leveling unit 6 attached at an installation point with a tripod 5, a horizontal rotating unit 7, the electronic level unit 8 provided on the horizontal rotating unit 7, and a scanner unit 9 provided on the upper portion of the electronic level unit 8. The leveling unit 6 is a so-called leveling device including a leveling screw and a bubble tube.

The horizontal rotating unit 7 includes a base portion 11 attached to the leveling unit 6 and a horizontal rotating portion 12 that integrally horizontally rotates the electronic level unit 8 and the scanner unit 9.

The horizontal rotating portion 12 is a hollow cylindrical member and includes a horizontal rotating shaft 14 extending along an axis H-H extending vertically. The horizontal rotating shaft 14 is rotatably supported by a horizontal bearing 13 of the base portion 11. The electronic level unit 8 is fixed and supported on the horizontal rotating portion 12 by an appropriate means such as a screw. The electronic level unit 8 and the scanner unit 9 integrally horizontally rotate as the horizontal rotating shaft 14 rotates.

The horizontal rotating portion 12 includes a horizontal rotation driving unit 15 that includes a horizontal drive motor, and a horizontal angle detector 16 (for example, a rotary encoder) that detects the rotation angle of the horizontal rotating shaft 14. The horizontal rotation driving unit 15 rotates the horizontal rotating shaft 14 about the axis H-H. The horizontal angle detector 16 detects the rotation angle of the horizontal rotating shaft 14 with respect to the base portion 11, that is, the rotation angle of the electronic level unit 8 and the scanner unit 9. The detection results obtained by the horizontal angle detector 16 are input to a control operation unit 40.

The electronic level unit 8 includes a collimation optical system 21 and a line sensor 22 in a level housing 20. The collimation optical system 21 is housed in a lens barrel 8a of a telescope and includes an objective lens portion 21a, a compensator 21b that automatically performs compensation for the optical axis, a beam splitter 21c, and an eyepiece lens portion 21d. The beam splitter 21c splits light entering the collimation optical system 21 and causes the line sensor 22 to receive a light image of a leveling staff LS to be collimated.

The line sensor 22 is an image sensor, for example, a CMOS or CCD. The line sensor 22 outputs a light reception signal to the control operation unit 40 to be described later.

The scanner unit 9 is fixed to the level housing 20 by an appropriate means such as a screw. An instrument center $O_2$ of the scanner unit 9 and the instrument center $O_1$ of the electronic level unit 8 coincide with each other in the horizontal direction and are arranged on the axis V-V. In addition, the positional relationship in the vertical direction is known. Furthermore, a collimation optical axis A of the electronic level unit 8 is parallel to the rotation axis (that is, the axis V-V) of a turning mirror 35 of the scanner unit 9 in the vertical direction.

The scanner unit 9 includes a scanner housing 30, a vertical rotating shaft 31 extending along the axis V-V extending in the horizontal direction, bearings 32, a vertical rotation driving unit 33 including a vertical rotary motor, a vertical angle detector 34 as, for example, a rotary encoder, the turning mirror 35, a distance measuring unit 36, a storage unit 37, and the control operation unit 40. A concave portion 30a is formed in the central portion of the scanner housing 30.

The vertical rotating shaft 31 is a hollow cylindrical member and is rotatably supported on the scanner housing 30 via the bearings 32 arranged on both sides of the concave portion 30a. The turning mirror 35 is provided inside the vertical rotating shaft 31 so as to be inclined at an angle of 45° with respect to the axial center of the vertical rotating shaft 31 (that is, the axis V-V). An opening 31a is provided in the vertical rotating shaft 31 at a position facing a reflecting surface 35a of the turning mirror 35 at an angle of 45°.

The vertical rotating shaft 31 includes a box-shaped projection cover 30b for protecting the turning mirror 35 exposed from the opening 31a. The projection cover 30b rotates integrally with the vertical rotating shaft 31. A circular window 30b1 is formed in the projection cover 30b at a position facing the reflecting surface 35a of the turning mirror 35. The window 30b1 is closed with a translucent-and/or-transparent resin plate 30b2 that transmits distance-measuring light.

The vertical rotation driving unit 33 rotates the vertical rotating shaft 31 around the axis V-V. The vertical angle detector 34 detects the rotation angle of the vertical rotating shaft 31 with respect to the scanner housing 30, that is, the rotation angle (vertical angle) of the turning mirror 35.

The axial center of the turning mirror 35 is arranged on a vertical axis (axis H-H) passing through the instrument center $O_1$ of the electronic level unit 8.

The distance measuring unit 36 includes a distance-measuring light transmitting unit 36a including a light emitting element, a light transmitting optical system 36b, a beam splitter 36c, a light receiving optical system 36d, and a distance-measuring light receiving unit 36e including a light receiving element.

The light emitting element emits distance-measuring light as laser pulse light to the turning mirror 35 via the light transmitting optical system 36b and the beam splitter 36c. The optical axis of the distance-measuring light exiting from the beam splitter 36c coincides with the axial center of the turning mirror 35. The turning mirror 35 deflects the distance-measuring light at a right angle. When the turning mirror 35 rotates around the axis V-V, the distance-measuring light is rotated and irradiated to a measurement target in a plane orthogonal to the axis V-V, thus being scanned in the plane.

The distance-measuring light reflected by the measurement target is deflected by the turning mirror 35 and received by the distance-measuring light receiving unit 36e through the beam splitter 36c and the light receiving optical system 36d.

The distance-measuring light receiving unit 36e is configured to output an incident light reception signal to the control operation unit 40. The control operation unit 40 calculates the distance to a reflection point of the distance-measuring light based on the light reception signal.

Note that the configuration of the scanner unit 9 is an example, and, for example, a known configuration like that disclosed in JP2014-178274 A, etc., can be used.

The control operation unit 40 is a microcomputer including a CPU that performs arithmetic processing, an image memory, and a ROM (read only memory) and a RAM (random access memory), which are auxiliary storage units.

The control operation unit 40 is connected to the horizontal rotation driving unit 15, the horizontal angle detector 16, the line sensor 22, the vertical rotation driving unit 33, the vertical angle detector 34, the distance measuring unit 36, the storage unit 37 (to be described later), a data storage unit 38, a display unit 39, and an operation unit 41 so as to allow data to be input and output. The control operation unit 40 controls these units and arithmetically processes the data acquired by each unit.

The control operation unit 40 controls the electronic level unit 8 to acquire an image of the leveling staff LS which the electronic level unit 8 collimates. More specifically, when the image pickup switch of the operation unit 41 is turned on, the control operation unit 40 sequentially reads out pixel data accumulated in the line sensor 22 and stores the data in the image memory.

The control operation unit 40 extracts a code pattern on the collimation optical axis A from signals from the line sensor 22, that is, the image data of the leveling staff LS, collates the code pattern with the reference code (a code pattern corresponding to a height value) stored in advance in the storage unit 37, and calculates the height of the collimation position of the electronic level unit 8 on the leveling staff LS.

The control operation unit 40 extracts a code pattern corresponding to the upper stadia hair of the collimation optical axis A and a code pattern corresponding to the lower stadia hair of the collimation optical axis A from the image data of the leveling staff LS acquired by the electronic level unit 8 and stored in advance in the image memory, collates the code patterns with the reference code stored in advance in the storage unit 37, and obtains the measurement values of distances corresponding to the respective code patterns.

The control operation unit 40 obtains the length between the upper and lower stadia hairs from the difference between the upper side height measurement value corresponding to the upper stadia hair and the lower side height measurement value corresponding to the lower stadia hair. The control operation unit 40 calculates a horizontal distance D (FIG. 1) from the instrument center $O_1$ of the electronic level unit 8 to the leveling staff LS by multiplying the obtained length by a stadia constant.

When measuring the height of the above-described leveling staff LS and distance to the leveling staff LS, the control operation unit 40 calculates the horizontal angle of the electronic level unit 8 in the collimation direction based on the detection results obtained by the horizontal angle detector 16.

The control operation unit 40 drives and controls the horizontal rotation driving unit 15 based on the detection results obtained by the horizontal angle detector 16, and also drives and controls the vertical rotation driving unit 33 based on the detection results obtained by the vertical angle detector 34 to scan distance-measuring light over the entire circumference in the horizontal and vertical directions (full dome scan) or a predetermined range, thereby measuring the distance to the irradiation point of the distance-measuring light at each point. The control operation unit 40 also acquires the horizontal and vertical angles of the distance-measuring light at each irradiation point in the irradiation direction from the horizontal angle detector 16 and the vertical angle detector 34. As a result, the control operation unit 40 acquires point cloud data.

The control operation unit 40 executes distance measurement for each pulse light of distance-measuring light (Time of Flight) based on the time difference (the roundtrip time of pulse light) between the emission timing of the light emitting element and the light reception timing of the light receiving element. Note that as a distance measuring method, it is possible to use a method of performing distance measurement based on the phase difference between emitted light and reflected light upon irradiation of continuous light or intermittent light.

Note that the distance measuring unit 36 includes an internal reference optical system (not illustrated) and is configured to make part of distance-measuring light enter, as internal reference light, the distance-measuring light receiving unit 36e. Highly accurate distance measurement can be performed by measuring a distance based on the time difference between the light reception timings of reflected distance-measuring light and internal reference light.

The storage unit 37 is, for example, a hard disk drive. The storage unit 37 stores programs and data for the execution of the above control and arithmetic operations.

The data storage unit 38 is, for example, an SD card, and stores various types of measurement data acquired by the laser scanner S and the data calculated by arithmetic operations.

The display unit 39 and the operation unit 41 are user interfaces of the laser scanner S. In the example illustrated in FIG. 1, the display unit 39 and the operation unit 41 are provided on the outer surface of the level housing 20. The display unit 39 is, for example, a liquid crystal display. The operation unit 41 is, for example, key buttons, etc. The display unit 39 and the operation unit 41 are configured to allow the worker to, for example, issue commands and make settings for the operation of the laser scanner S, check measurement results, and adjust the laser scanner via the display unit 39 and the operation unit 41.

Note that in this embodiment, the control operation unit 40, the storage unit 37, the data storage unit 38, the display unit 39, and the operation unit 41 are commonly used for the electronic level unit 8 and the scanner unit 9. However, such components may be separately used for the electronic level unit 8 and the scanner unit 9. In this case, the control operation units 40 of the electronic level unit 8 and the scanner unit 9 are configured to input and output data to and from each other.

The above configuration is the basic configuration of the laser scanner S. A configuration for measuring the instrument height of the laser scanner S will be described below.

As illustrated in FIGS. 2 and 3, circular windows 30c1 and 30d1 are respectively formed in the upper and lower surfaces of the bottom portion of the concave portion 30a of the scanner housing 30 at collimation positions where the scanner unit 9 is collimated vertically downward, that is, at positions on the axis H-H. The windows 30c1 and 30d1 are respectively closed with translucent-and/or-transparent resin plates 30c2 and 30d2 that transmit distance-measuring light.

Circular windows 20a1 and 20b1 are respectively formed in the upper and lower surfaces of the level housing 20 at collimation positions where the scanner unit 9 is collimated vertically downward, that is, positions on the axis H-H. The windows 20a1 and 20b1 are closed with translucent-and/or-transparent resin plates 20a2 and 20b2 that transmit distance-measuring light from the scanner unit 9.

The sizes and shapes of the windows 30c1 and 30d1 and the windows 20a1 and 20b1 are not specifically limited as long as they do not block distance-measuring light beams.

As illustrated in FIG. 3, four deflecting mirrors 23a, 23b, 23c, and 23d are arranged on a plane, in the level housing 20, which passes through the axis H-H and is orthogonal to the collimation optical axis A (and the axis V-V) so as to avoid the lens barrel 8a.

The horizontal rotating shaft 14 of the horizontal rotating unit 7 has a hollow cylindrical shape. Through holes 6a, 6b, and 5b are provided in the leveling unit 6 and a base 5a of the tripod 5 at positions on the axis H-H.

As illustrated in FIG. 3, when the distance measuring unit 36 emits distance-measuring light L while the scanner unit 9 is collimated vertically downward, the distance-measuring light L is reflected by the turning mirror 35 and sequentially transmitted through the resin plate 30b2 of the projection cover 30b, the resin plates 30c2 and 30d2 of the scanner housing 30, and the upper side resin plate 20a2 of the level housing 20. The light enters the level housing 20 and is sequentially reflected by the deflecting mirrors 23a, 23b, and 23c. The light is then reflected by the deflecting mirror 23d and guided vertically downward. The distance-measuring light L directed vertically downward is irradiated to the ground surface via the lower side resin plate 20b2, the inside of the horizontal rotating shaft 14, and the through holes 6a, 6b, and 5b.

Then, the reflected distance-measuring light reflected by the ground surface travels in the opposite direction along the same optical path and enters the turning mirror 35. This makes it possible to measure the distance to the ground surface so as to include the positional shift of the optical path from the axis H-H as in normal distance measurement.

When an instrument height measurement switch is turned on from the operation unit 41, the control operation unit 40 measures the distance to the ground surface upon collimating the scanner unit 9 vertically downward. The length by which the optical path length is shifted by the deflecting mirrors 23a, 23b, 23c, and 23d is obtained in advance by measurement and stored as a correction value in the storage unit 37. The control operation unit 40 calculates the instrument height of the laser scanner S by correcting the distance measurement value obtained from the above measurement results using the optical path length shifted from the stored axis H-H as a correction value.

In the example illustrated in FIG. 3, the deflecting mirrors 23a and 23d are arranged on a distance-measuring light irradiation plane including the axis H-H. The deflecting mirrors 23a and 23b are arranged parallel to each other at an angle of 45° with respect to the axis H-H. The deflecting mirrors 23c and 23d are arranged parallel to each other at an angle of -45° with respect to the axis H-H. The deflecting mirrors 23a and 23b and the deflecting mirrors 23d and 23c are arranged to face each other via the lens barrel 8a to make each deflecting mirror deflect the distance-measuring light L entering vertically downward by 90°. This guides the optical path of the distance-measuring light L vertically downward so as to avoid the lens barrel 8a.

However, the arrangement angles and the number of deflecting mirrors are not limited to those described above and can be set as appropriate as long as the distance-measuring light L entering the level housing 20 vertically downward can be guided from the bottom surface of the level housing 20 vertically downward so as to avoid the lens barrel 8a.

(Study on Effective Irradiation Range)

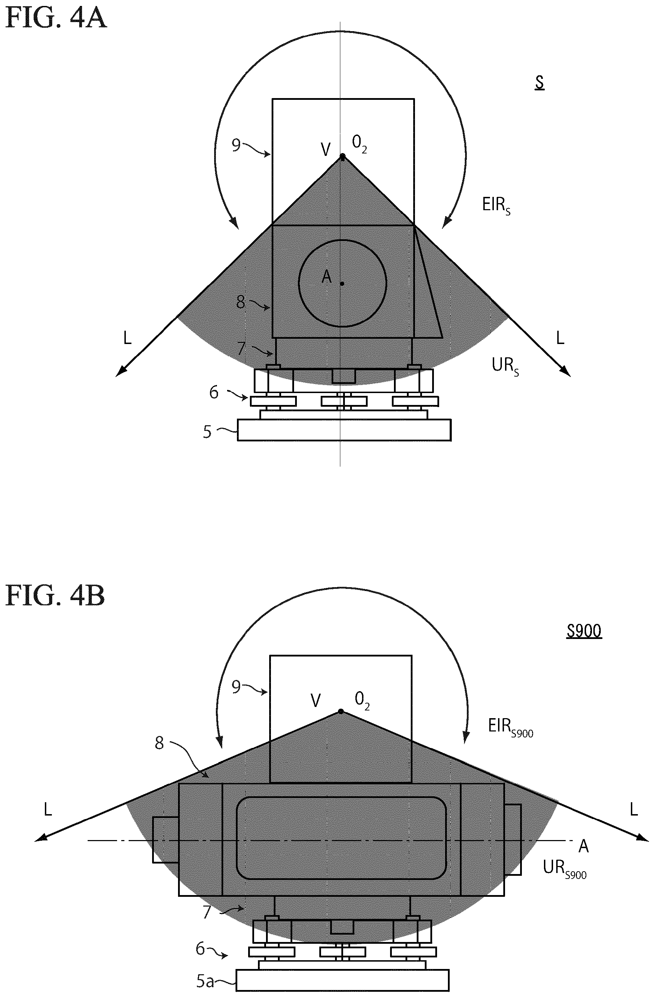

FIG. 4A illustrates the laser scanner S according to this embodiment. FIG. 4B illustrates the effective irradiation range of distance-measuring light of a laser scanner S900 as a comparative example based on the assumption that the scanner unit 9 and the electronic level unit 8 are arranged to make the rotation axis of the scanner unit in the vertical direction orthogonal to the collimation optical axis A of the electronic level unit 8.

Assume that in this case, the laser scanner S900 has the same configuration as that of the laser scanner S except for the arrangement of the electronic level unit 8 and the scanner unit 9.

FIGS. 4A and 4B are views of the laser scanners S and S900 viewed from the rotation axis direction of the turning mirror 35. Referring to FIG. 4A, the axis V-V of vertical rotation of the turning mirror 35, and the collimation optical axis A of the electronic level unit 8 extend parallel in the front-back direction in the front view of the drawing surface. On the other hand, referring to FIG. 4B, the axis V-V of the vertical rotation axis of the turning mirror 35 extends in the front-back direction in the front view of the drawing surface, and the collimation optical axis A of the electronic level unit 8 extends in the right-left direction of the drawing surface.

FIGS. 4A and 4B illustrate effective irradiation ranges EIR ($EIR_S$ and $EIR_{S900}$) and ineffective ranges ($UR_S$ and $UR_{S900}$), in which the level housing interferes with distance-measuring light to disable the acquisition of effective data, when distance-measuring light is scanned by 360°.

As is obvious from FIGS. 4A and 4B, as compared with the laser scanner $S_{900}$, in the laser scanner S, the length of the level housing 20 which interferes with a vertically rotating irradiation plane of the distance-measuring light L is short, the effective irradiation range $EIR_S$ is large, and the ineffective range $UR_S$ is small.

Accordingly, in the laser scanner S according to this embodiment, the rotation axis of the turning mirror 35 is arranged parallel to the collimation optical axis A of the telescope of the electronic level unit 8. This arrangement makes the irradiation plane of distance-measuring light become orthogonal to the longitudinal direction of the electronic level unit 8. For this reason, as compared with a case in which the rotation axis of the turning mirror of a scanner is arranged orthogonal to the collimation optical axis of the telescope of an electronic level in conformity with a conventional scanner-equipped total station, the range in which the level housing 20 interferes with the irradiation range is small, the large effective irradiation range EIR can be ensured, and the ineffective range UR, in which no effective data can be acquired, can be reduced.

(Surveying Method Using Laser Scanner S)

The laser scanner S having the above configuration can be used for surveying in the following manner. Referring to FIG. 1, P1 is a known point, and P2 is an unknown new point. Although not illustrated, a known rear viewpoint is prepared.

First, the laser scanner S is installed and leveled at the known point P1 ($x_1$, $y_1$, $z_1$). Next, the leveling staff LS is vertically installed at a known rear viewpoint. The electronic level unit 8 then collimates the leveling staff LS to measure the horizontal angle of at least the leveling staff LS (rear viewpoint) in the collimation direction. This makes it possible to obtain the direction angle of the laser scanner S.

Next, the leveling staff LS is vertically installed at the new point P2 ($x_2$, $y_2$, $z_2$). The electronic level unit 8 then collimates the leveling staff LS and measures a leveling staff height LH, a horizontal distance D between P1 and P2, and the horizontal angle of the leveling staff LS (point P2) in the collimation direction. The scanner unit 9 then measures an instrument height IH of the laser scanner S.

Since the coordinates ($x_1$, $y_1$, $z_1$) of the point P1 are known, a z-coordinate $z_2$ of the point P2 is obtained according to

$$z_2 = z_1 + IH - LH.$$

In addition, x- and y-coordinates $x_2$ and $y_2$ of the point P2 can be obtained from the coordinates of the point P1, the horizontal distance D between P1 and P2, and the horizontal angle.

In this manner, the laser scanner S can survey an unknown point in a coordinate system centered on the laser scanner S.

It is also possible to proceed with a survey on an instrument point for integrating point cloud data in the absolute coordinate system as in a scanner-equipped total station by combining the backward intersection method and the rear viewpoint-and-instrument-point method using the laser scanner S.

When a similar survey is performed by using only a scanner-equipped total station or scanner, a prism is installed and leveled on a tripod with a leveling base, and a worker needs to measure the height of the prism with a measure, etc. In addition, when an instrument height is measured, the worker needs to perform measurement with a measure, etc. This is a cumbersome operation.

The laser scanner S according to this embodiment allows a worker to only vertically install the leveling staff LS while checking the level when surveying an instrument point. In addition, the worker can survey an instrument point without any consideration for height measurement. This facilitates the work and shortens the work time.

In a survey on an instrument point using a conventional laser scanner or scanner-equipped total station, after a survey is performed by collimating a prism, etc., installed at a rear viewpoint or next instrument point from the installation point of the surveying instrument, observation of point cloud data at the installation point is continuously started. In this case, since the scanner and the total station are collimated in the same direction, for example, the leveling base of the prism or the worker who removes the prism is reflected at the time of acquisition of point cloud data. This reflection sometimes becomes noise.

According to the laser scanner S according to this embodiment, since the rotation axis V-V of the turning mirror 35 of the scanner unit 9 is arranged parallel to the collimation optical axis A of the telescope of the electronic level unit 8, the collimation direction of the scanner and the collimation direction of the electronic level are always offset by 90°. Accordingly, even if the observation of point cloud data with the scanner unit is started at the same installation point in a series of work upon the completion of survey on the next instrument point, the leveling staff itself or worker is not immediately reflected in point cloud data. The worker or leveling staff can avoid the scan range of the scanner unit before entering the range. This can reduce noise at the time of the observation of point cloud data.

(Modification of First Embodiment)

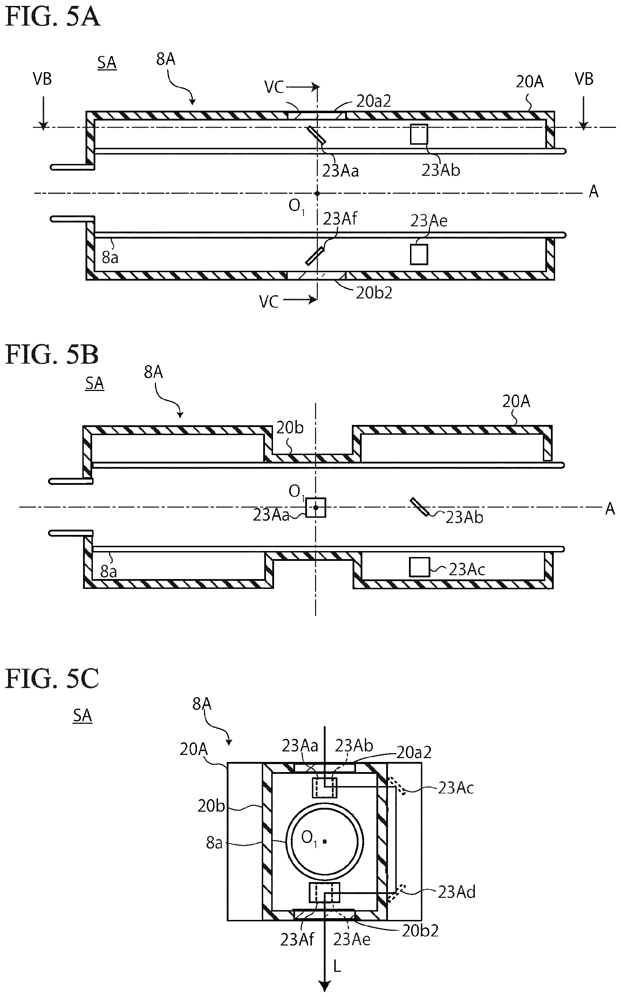

FIG. 5A is a longitudinal sectional view of an electronic level unit 8A of a laser scanner SA according to a modification of the first embodiment taken along a plane including the axis V-V. FIG. 5B is a sectional view taken along a line VB-VB of FIG. 5A. FIG. 5C is a sectional view taken along a line VC-VC of FIG. 5A. FIGS. 5A, 5B, and 5C omit the illustration of constituent members except for a level housing 20A, the lens barrel 8a, and deflecting mirrors 23Aa to 23Af.

The laser scanner SA generally has the same configuration as that of the laser scanner S except for the shape of the level housing 20A and the number and arrangement of the deflecting mirrors 23Aa to 23Af for measuring an instrument height.

The level housing 20A includes a narrow portion 20b in the vicinity of the central portion including the rotating irradiation plane of distance-measuring light. The width of the narrow portion 20b in a direction orthogonal to the collimation optical axis of the level housing 20A is reduced to a width corresponding to the lens barrel 8a.

In the level housing 20A, the six deflecting mirrors 23Aa to 23Af are arranged to sequentially reflect vertically downward distance-measuring light entering via the resin plate 20a2 so as to make the light exit vertically downward from the resin plate 20b2.

More specifically, the first deflecting mirror 23Aa is arranged on the axis H-H on the top of the lens barrel 8a. The second deflecting mirror 23Ab is horizontally offset from the first deflecting mirror 23Aa to the objective lens side by a predetermined distance. The third deflecting mirror 23Ac is horizontally offset from the second deflecting mirror 23Ab so as to avoid the lens barrel 8a.

The fourth deflecting mirror 23Ad is offset from the third deflecting mirror 23Ac in the vertical downward direction so as to avoid the lens barrel 8a. The fifth deflecting mirror 23Ae is horizontally offset from the fourth deflecting mirror 23Ad so as to coincide with the horizontal position of the collimation optical axis A. The sixth deflecting mirror 23Af is horizontally offset from the fifth deflecting mirror 23Ae onto the axis H-H.

Each of the deflecting mirrors 23Aa to 23Af deflects incident light by 90° and sends the light to the next mirror. As a result, as illustrated in FIG. 5C, the vertically downward distance-measuring light L entering via the resin plate 20a2 is sequentially reflected to exit from the resin plate 20b2 vertically downward.

As described above, like the laser scanner S, the laser scanner SA is configured to allow the scanner unit 9 to measure an instrument height by making the storage unit 37 store a correction value in advance. In addition, in the laser scanner SA, the narrow portion 20b reduced in width in a direction orthogonal to the collimation optical axis A is provided at a position where distance-measuring light is rotated and irradiated, and the width of the narrow portion 20b is set to a width equivalent to the diameter of the lens barrel 8a, which is the minimum width for achieving a function as that of the level. This makes it possible to minimize the width of the level housing 20A, further reduce the ineffective range UR, and increase the effective irradiation range EIR.

(Second Embodiment)

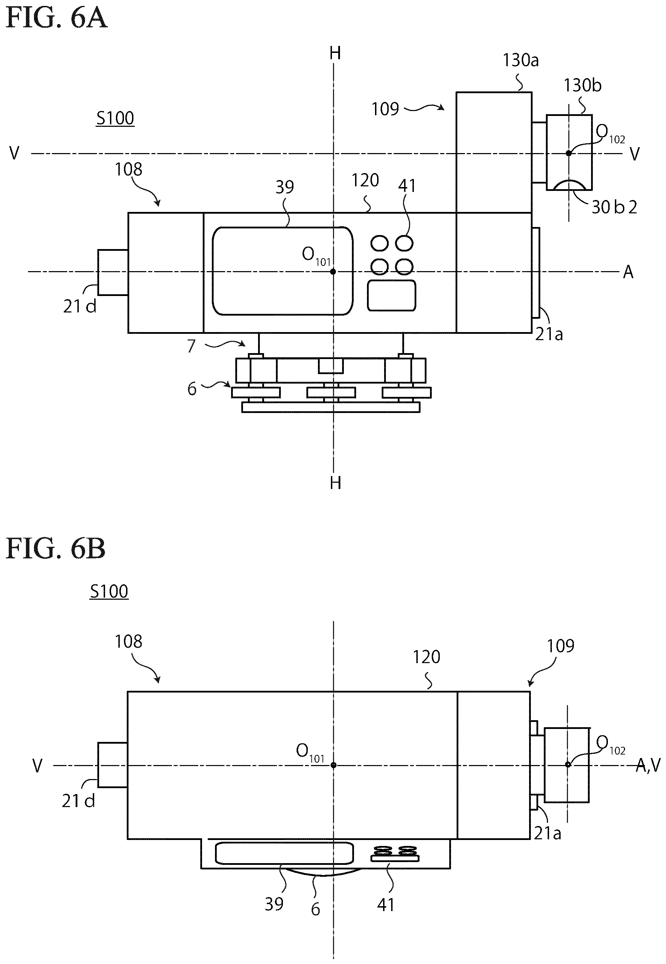

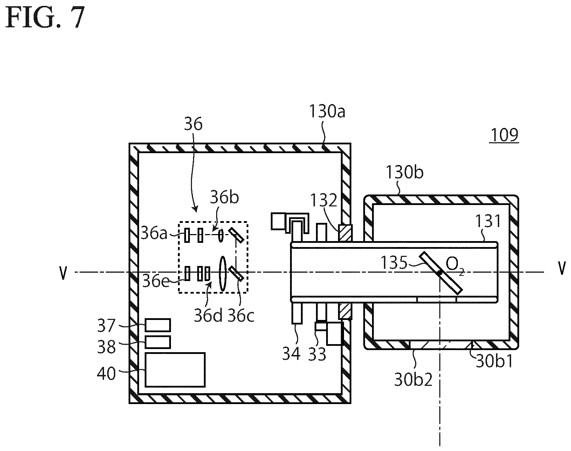

FIG. 6A is a front view of a laser scanner S100 according to the second embodiment. FIG. 6B is a plan view of the laser scanner S100. FIG. 7 is a longitudinal sectional view of a scanner unit 109 of the laser scanner S100 taken along a plane including an axis V-V.

Like the laser scanner S, the laser scanner S100 includes a leveling unit 6, a horizontal rotating unit 7, an electronic level unit 108 provided on the horizontal rotating unit 7, and the scanner unit 109.

The electronic level unit 108 has almost the same configuration as that of the electronic level unit 8 but does not include the windows 20a1 and 20b1 and the deflecting mirrors 23a to 23d provided for the level housing 20A to measure an instrument height.

As illustrated in FIG. 7, the scanner unit 109 has almost the same constituent members as those of the scanner unit 9. However, unlike the scanner unit 9 that has the vertical rotating shaft 31 and the projection cover 30b rotatably supported by the bearings 32 on both sides of the concave portion 30a, the scanner unit 109 has a vertical rotating shaft 131 and a projection cover 130b rotatably cantilevered with a bearing 132.

The scanner unit 109 has a vertical rotation driving unit 33, a vertical angle detector 34, and a distance measuring unit 36 arranged in a scanner housing 130.

A turning mirror 135 is fixed inside the vertical rotating shaft 131 such that the axial center of the turning mirror 135 tilts at -45° with respect to the axis V-V so as to coincide with the axis V-V.

The optical axis of distance-measuring light exiting from a beam splitter 36c coincides with the axial center of the turning mirror 135. The distance-measuring light is rotated and irradiated to a measurement target within a plane orthogonal to the axis V-V so as to be scanned within the plane as the turning mirror 135 rotates integrally with the vertical rotating shaft 131 around the axis V-V.

The scanner unit 109 is fixed to a level housing 120 by an appropriate means such as a screw on the top of the objective lens side end portion such that the irradiation plane of distance-measuring light from the scanner unit 109 is located outside from an objective lens portion 21a. The collimation optical axis A of the electronic level unit 108 is parallel to the vertical rotation axis (axis V-V) of the turning mirror 135 of the scanner unit 109. An instrument center $O_{102}$ of the scanner unit 109 is located on the axis V-V, and an instrument center $O_{101}$ of the electronic level unit 108 is arranged on a collimation optical axis A of the electronic level unit 108, so that the axis V-V and the collimation optical axis A coincide with each other in the horizontal direction. The positional relationships between the instrument center $O_{102}$ of the scanner unit 109 and the instrument center $O_{101}$ of the electronic level unit 108 in the vertical and horizontal directions are known in advance and stored in a storage unit 37.

In the laser scanner S100, level housing does not interfere with distance-measuring light when the scanner unit 109 scans the distance-measuring light, and hence there is no ineffective range UR, and an effective irradiation range EIR of distance-measuring light in the vertical direction corresponds to the entire circumference (360°).

In the laser scanner S100, when the scanner unit 109 is collimated vertically downward, there is no member that blocks the ground surface direction. Accordingly, unlike in the first embodiment, the electronic level housing and its inside does not need to be provided with any special member for guiding distance-measuring light vertically downward. This simplifies the configuration. Note that an instrument height is calculated based on the positional relationship between the instrument center $O_{102}$ of the scanner unit 109 and the instrument center $O_{101}$ of the electronic level unit 108 in the vertical direction.

In the laser scanner S100, a distance measured as an instrument height is not the distance from the instrument center $O_{102}$ of the scanner unit 109 to the installation point of the laser scanner S100. This distance is the distance to the ground surface immediately below the instrument center $O_{102}$ of the scanner unit 109, and hence is not necessarily an accurate instrument height. However, there is no special problem when the laser scanner S100 is installed at an instrument point provided on a flat ground surface such as an indoor floor surface.

Even when the scanner unit 109 is mounted on the top of the objective lens side end portion of the electronic level unit 108, making the collimation optical axis A of the electronic level unit 108 become parallel to the vertical rotation axis (that is, the axis V-V) of the turning mirror 135 of the scanner unit 109 can eliminate the ineffective range UR and increase the effective irradiation range EIR. In addition, the laser scanner S100 can provide effects similar to those of the laser scanner S.

In the above case, the scanner unit 109 is arranged on the top of the object lens side end portion. However, the scanner unit 109 may be arranged on the top of the eyepiece lens side end portion. Scanner units may be arranged on the tops of both the objective lens side end portion and the eyepiece lens side end portion.

(Modification of Second Embodiment)

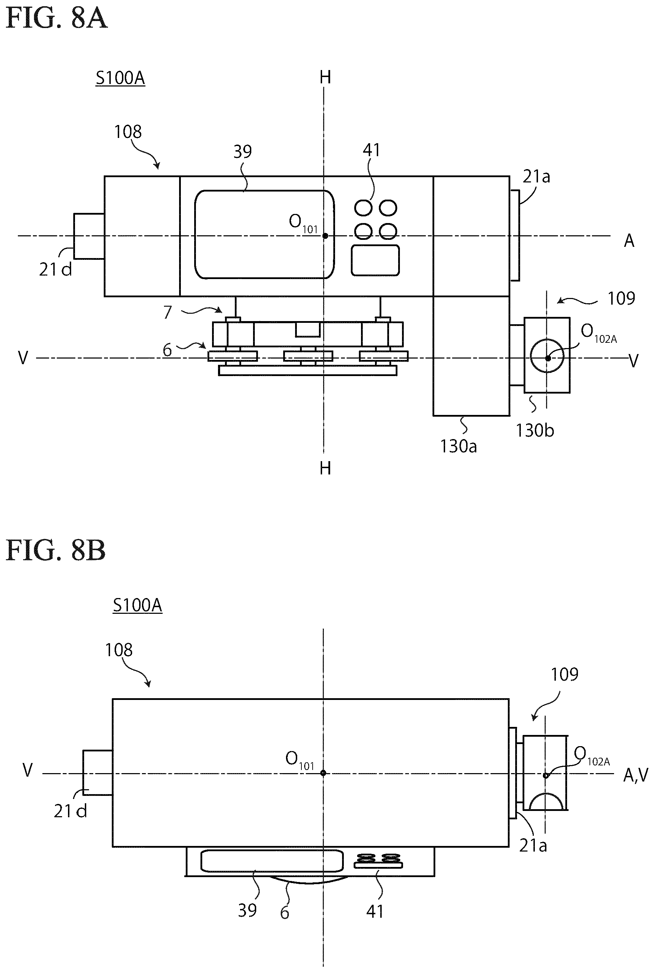

FIG. 8A is a front view of a laser scanner S100A according to a modification of the second embodiment. FIG. 8B is a plan view of the laser scanner S100A.

The laser scanner S100A is obtained by mounting the scanner unit 109 of the laser scanner S100 on the bottom of the objective lens side end portion. In the laser scanner S100 as well, the scanner unit 109 is fixed to a level housing 120 such that the irradiation plane of distance-measuring light from the scanner unit 109 is located outside from an objective lens portion 21a.

In addition, the collimation optical axis A of the electronic level unit 108 is parallel to the vertical rotation axis (that is, the axis V-V) of the turning mirror 135 of the scanner unit 109. The instrument center $O_{102}$ of the scanner unit 109 is arranged on the axis V-V. Such arrangement can provide the same effects as those of the laser scanner S and the laser scanner S100.

Furthermore, in this modification, since the scanner unit 109 is mounted on the bottom of the level housing 120, the dimension of the overall laser scanner in the height direction is reduced. This provides an additional effect of reducing the size of the apparatus.

Although the preferred embodiments of the present invention have been described above, the above embodiments are examples of the present invention and can be combined based on the knowledge of a person skilled in the art, and such combined embodiments are also included in the scope of the present invention.

REFERENCE SIGNS LIST

S, SA, S100, S100A Laser scanner
8, 8A, 108 Electronic level unit
9, 109 Scanner unit
15 Horizontal rotation driving unit
16 Horizontal angle detector
20, 20A, 120 Level housing
20a1, 20b1 Window

23a, 23b, 23c, 23d, 23Aa, 23Ab, 23Ac, 23Ad, 23Ae, 23Af Deflecting mirror
33 Vertical rotation driving unit
34 Vertical angle detector
35, 135 Turning mirror
36 Distance measuring unit
LS Leveling staff

## Claims

1. A laser scanner (S, SA, S100, S100A) comprising an electronic level unit (8, 8A, 108) and a scanner unit (9, 109),

    the electronic level unit (8, 8A, 108) including a telescope and a level housing (20, 20A, 120) that houses the telescope, and an image sensor (22) included in the level housing (20, 20A, 120), the electronic level unit (8, 8A, 108) being configured to acquire an image of a leveling staff (LS) collimated with the telescope by the image sensor (22) and measuring a height of the leveling staff (LS) at a collimation position and a distance to the leveling staff (LS) by extracting code patterns from the image data of the leveling staff (LS) and collating the code patterns with the reference code stored in advance,
    the scanner unit (9, 109) including a distance measuring unit (36) configured to perform distance measurement by emitting distance-measuring light and receiving reflected light from a measurement target, a turning mirror (35, 135) configured to rotate and irradiate the distance-measuring light in a vertical direction, and a vertical rotation driving unit (33) configured to rotate and drive the turning mirror (35, 135), a horizontal rotation driving unit (15) configured to integrally rotate and drive the electronic level unit (8, 8A, 108) and the scanner unit (9, 109) in a horizontal direction, and a horizontal angle detector (16) and a vertical angle detector (34) for detecting a direction angle of the distance-measuring light to scan the distance measuring light in the horizontal and vertical direction to acquire point cloud data of the measuring target, wherein
    the scanner unit (9, 109) is configured to acquire an instrument height by irradiating a ground surface with the distance-measuring light in the vertical direction, and
    the turning mirror (35, 135) has a rotation axis arranged parallel to a collimation optical axis of the telescope of the electronic level unit (8, 8A, 108).

2. The laser scanner (S, SA) according to Claim 1, wherein the scanner unit (9) is arranged on a top of the telescope of the electronic level unit (8, 8A) such that a center of the scanner unit (9) and a center of the electronic level unit (8, 8A) are coincide with each other in the horizontal direction,

    an upper surface and a lower surface of the level housing (20, 20A) are provided with windows (20a1,20b1) that transmit distance-measuring light from the scanner unit (9),
    the level housing (20, 20A) internally includes a plurality of deflecting mirrors(23a~23-d,23Aa~23Af), and
    the plurality of deflecting mirrors (23a~23d,23Aa~23Af) reflects distance-measuring light emitted vertically downward from the scanner unit (9) so as to avoid the telescope and irradiate the distance-measuring light vertically downward from the window provided in the lower surface side.

3. The laser scanner (S100, S100A) according to Claim 1, wherein the electronic level unit (108) includes an objective lens (21a) at a first end and an eyepiece lens (21d) at a second end, and the scanner unit (109) is cantilevered by any one of the first end and the second end of the electronic level unit (108).

4. The laser scanner (S100A) according to Claim 3, wherein the scanner unit (109) is arranged on a bottom of the electronic level unit (108).

5. The laser scanner (SA) according to Claim 2, wherein the level housing (20A) includes a narrow portion (20b) at a portion including the rotating irradiation plane, and wherein
    the plurality of deflecting mirrors (23Aa~23Af) reflects distance-measuring light so as to avoid the narrow portion (20b) and the telescope and irradiate the distance-measuring light vertically downward from the window (20b2) provided in the lower surface side.

6. The laser scanner (S100) according to claim 3, wherein the scanner unit (109) is arranged at the top of the object lens side portion, the top of the eyepiece lens side portion, or both tops of the object lens side portion and the top of the object lens side portion, of the electronic level unit (108).

## Patentansprüche

1. Laserscanner (S, SA, S100, S100A) mit einer elektronischen Wasserwaageneinheit (8, 8A, 108) und einer Scannereinheit (9, 109),

    wobei die elektronische Wasserwaageneinheit (8, 8A, 108) ein Teleskop und ein Wasserwaagengehäuse (20, 20A, 120), welches das Teleskop aufnimmt, und einen in dem Wasserwaagengehäuse (20, 20A, 120) enthaltenen Bildsensor (22) aufweist, wobei die elektronische Wasserwaageneinheit (8, 8A, 108) dazu ausgebildet ist, ein mit dem Teleskop kollimiertes Bild einer Nivellierlatte (LS) durch den Bildsensor (22) zu erfassen und eine Höhe der Nivellierstange (LS) an einer Kollimationsposition und eine Entfernung von der Nivellierstange (LS) durch Extrahieren von Codemustern aus den Bilddaten der Nivellierstange (LS) und Kollationieren der Codemuster mit den vorab gespeicherten Referenzcodes zu messen, wobei die Scannereinheit (9, 109) aufweist: eine Entfernungsmesseinheit (36), die dazu ausgebildet ist, eine Entfernungsmessung durch Emittieren von Entfernungsmesslicht und Empfangen von reflektiertem Licht von einem Messziel durchzuführen, einen Drehspiegel (35, 135), der dazu ausgebildet ist, zu drehen und das Entfernungsmesslicht in eine vertikale Richtung abzustrahlen, und eine Vertikaldrehantriebseinheit (33), die dazu ausgebildet ist, den Drehspiegel (35, 135) zu drehen und anzutreiben, eine Horizontaldrehantriebseinheit (15), die dazu ausgebildet ist, die elektronische Wasserwaageneinheit (8, 8A, 108) und die Scannereinheit (9, 109) einstückig in horizontaler Richtung zu drehen und anzutreiben, und einen Horizontalwinkeldetektor (16) und einen Vertikalwinkeldetektor (34) zum Erkennen eines Richtungswinkels des Entfernungsmesslichts, um das Entfernungsmesslicht in der horizontalen und der vertikalen Richtung abzutasten, um Punktwolkendaten des Messziels zu erfassen, wobei die Scannereinheit (9, 109) dazu ausgebildet ist, eine Instrumentenhöhe durch Beleuchten einer Bodenfläche mit dem Entfernungsmesslicht in vertikaler Richtung zu erfassen, und der Drehspiegel (35, 135) eine Drehachse aufweist, die parallel zu einer optischen Kollimationsachse des Teleskops der elektronischen Wasserwaageneinheit (8, 8A, 108) angeordnet ist.

2. Laserscanner (8, 8A) nach Anspruch 1, bei welchem die Scannereinheit (9) auf einer Oberseite der elektronischen Wasserwaageneinheit (8, 8A) derart angeordnet ist, dass ein Mittelpunkt der Scannereinheit (9) and ein Mittelpunkt der elektronischen Wasserwaageneinheit (8, 8A) in horizontaler Richtung zusammenfallen,

wobei eine Oberseite und eine Unterseite des Wasserwaagengehäuses (20, 20A) mit Fenstern (20a1, 20b1) versehen sind, welche Entfernungsmesslicht von der Scannereinheit (9) durchlassen, wobei das Wasserwaagengehäuse (20, 20A) inwendig mehrere Ablenkspiegel (23a-23d, 23Aa-23Af) aufweist, und die mehreren Ablenkspiegel (23a-23d, 23Aa-23Af) von der Scannereinheit (9) vertikal nach unten emittiertes Entfernungsmesslicht reflektieren, so dass das Teleskop umgangen wird und das Entfernungsmesslicht aus dem in der Unterseite vorgesehenen Fenster vertikal nach unten abzustrahlen.

3. Laserscanner (S100, S100A) nach Anspruch 1, bei welchem die elektronische Wasserwaageneinheit (108) eine Objektivlinse (21a) an einem ersten Ende und eine Okularlinse (21d) an einem zweiten Ende aufweist, und die Scannereinheit (9) über das erste Ende oder das zweite Ende der elektronischen Wasserwaageneinheit (108) freitragend ist.

4. Laserscanner (S100A) nach Anspruch 3, bei welchem die Scannereinheit (109) an einer Unterseite der elektronischen Wasserwaageneinheit (108) angeordnet ist.

5. Laserscanner (SA) nach Anspruch 2, bei welchem das Wasserwaagengehäuse (20A) einen schmalen Bereich (20b) in einem Bereich aufweist, welcher die Bestrahlungsdrehebene einschließt, und bei welchem die mehreren Ablenkspiegel (23Aa-23Af) Entfernungsmesslicht reflektieren, um den schmalen Bereich (20b) und das Teleskop zu umgehen und das Entfernungsmesslicht aus dem in der Unterseite vorgesehenen Fenster (20b2) vertikal nach unten abzustrahlen.

6. Laserscanner (100) nach Anspruch 3, bei welchem die Scannereinheit (109) auf der Oberseite des objektivlinsenseitigen Bereich, der Oberseite des okularlinsenseitigen Bereichs oder sowohl der Oberseite des objektivlinsenseitigen Bereich als auch der Oberseite des okularlinsenseitigen Bereichs der elektronischen Wasserwaageneinheit (108) angeordnet ist.

## Revendications

1. Dispositif de balayage laser (S, SA, S100, S100A) comprenant une unité de niveau électronique (8, 8A, 108) et une unité de balayage (9, 109),

l'unité de niveau électronique (8, 8A, 108) comprenant une lunette et un boîtier de niveau (20, 20A, 120) qui loge la lunette, et un capteur d'image (22) inclus dans le boîtier de niveau (20, 20A, 120), l'unité de niveau électronique (8, 8A, 108) étant configurée pour acquérir une image d'une mire de nivellement (LS) collimée avec la lunette par le capteur d'image (22) et mesurer une hauteur de la mire de nivellement (LS) à une position de collimation et une distance jusqu'à la mire de nivellement (LS) en extrayant des motifs de code à partir des données d'image de la mire de nivellement (LS) et en assemblant les motifs de code avec le code de référence préalablement enregistré,

l'unité de balayage (9, 109) comprenant une unité de mesure de distance (36) configurée pour effectuer une mesure de distance en émettant une lumière de mesure de distance et en recevant une lumière réfléchie par une cible de mesure, un miroir tournant (35, 135) configuré pour tourner et irradier la lumière de mesure de distance dans une direction verticale, et une unité d'entraînement en rotation verticale (33) configurée pour faire tourner et entraîner le miroir tournant (35, 135), une unité d'entraînement en rotation horizontale (15) configurés pour faire tourner et entraîner d'un seul tenant l'unité de niveau électronique (8, 8A, 108) et l'unité de balayage (9, 109) dans une direction horizontale, et un détecteur d'angle horizontal (16) et un détecteur d'angle vertical (34) pour détecter un angle de direction de la lumière de mesure de distance pour balayer la lumière de mesure de distance dans les directions horizontale et verticale pour acquérir des données de nuage de points de la cible de mesure, dans lequel

l'unité de balayage (9, 109) est configurée pour acquérir une hauteur d'instrument en irradiant une surface de sol avec la lumière de mesure de distance dans la direction verticale, et

le miroir tournant (35, 135) présente un axe de rotation agencé parallèlement à un axe optique de collimation de la lunette de l'unité de niveau électronique (8, 8A, 108).

2. Dispositif de balayage laser (S, SA) selon la revendication 1, dans lequel l'unité de balayage (9) est agencée sur un dessus de la lunette de l'unité de niveau électronique (8, 8A) de sorte qu'un centre de l'unité de balayage (9) et un centre de l'unité de niveau électronique (8, 8A) coïncident l'un avec l'autre dans la direction horizontale,

une surface supérieure et une surface inférieure du boîtier de niveau (20, 20A) sont pourvues de fenêtres (20a1, 20b1) qui transmettent une lumière de mesure de distance provenant de l'unité de balayage (9),

le boîtier de niveau (20, 20A) comprend à l'intérieur une pluralité de miroirs de déviation (23a~23d, 23Aa~23Af), et

la pluralité de miroirs de déviation (23a~23d, 23Aa~23Af) réfléchissent la lumière de mesure de distance émise verticalement vers le bas par l'unité de balayage (9) de manière à éviter la lunette et à irradier la lumière de mesure de distance verticalement vers le bas à partir de la fenêtre fournie du côté surface inférieur.

3. Dispositif de balayage laser (S100, S100A) selon la revendication 1, dans lequel l'unité de niveau électronique (108) comprend une lentille d'objectif (21a) à une première extrémité et une lentille d'oculaire (21d) à une seconde extrémité, et l'unité de balayage (109) est en porte-à-faux à partir de l'une quelconque parmi la première extrémité et la seconde extrémité de l'unité de niveau électronique (108).

4. Dispositif de balayage laser (S100A) selon la revendication 3, dans lequel l'unité de balayage (109) est agencée sur un fond de l'unité de niveau électronique (108).

5. Dispositif de balayage laser (SA) selon la revendication 2, dans lequel le boîtier de niveau (20A) comprend une partie étroite (20b) au niveau d'une partie comprenant le plan d'irradiation rotatif, et dans lequel :

la pluralité de miroirs de déviation (23Aa~23Af) réfléchissent la lumière de mesure de distance de manière à éviter la partie étroite (20b) et la lunette et à irradier la lumière de mesure de distance verticalement vers le bas à partir de la fenêtre (20b2) fournie du côté surface inférieur.

6. Dispositif de balayage laser (S100) selon la revendication 3, dans lequel l'unité de balayage (109) est agencée au-dessus de la partie latérale de lentille d'objet, au-dessus de la partie latérale de lentille d'oculaire, ou à la fois au-dessus de la partie latérale de lentille d'objet et au-dessus de la partie latérale de lentille d'objet, de l'unité de niveau électronique (108).

# FIG. 1

EP 3 812 702 B1

FIG. 2

# FIG. 3

FIG. 4A

FIG. 4B

# FIG. 5A

# FIG. 5B

# FIG. 5C

## FIG. 6A

## FIG. 6B

# FIG. 7

## FIG. 8A

## FIG. 8B

**EP 3 812 702 B1**

**REFERENCES CITED IN THE DESCRIPTION**

**Patent documents cited in the description**

- JP 2019128196 A
- JP 2015034726 A
- DE 19802379 A1
- JP 2014178274 A